# EUROPÄISCHE PATENTSCHRIFT

(11) **EP 1 465 762 B1**
(45) Veröffentlichungstag und Bekanntmachung des Hinweises auf die Patenterteilung: **20.01.2010**
(21) Anmeldenummer: 02781044.9
(22) Anmeldetag: 09.12.2002
(51) Int. Cl.: B29C 47/00, A23G 1/20

(54) **MASCHINE ZUM VERARBEITEN FLIESSFÄHIGER / PASTÖSER MASSEN MITTELS EINES IN FÖRDERRICHTUNG VIBRIERBAREN ABSCHNITTES**
MACHINE FOR PROCESSING FREE-FLOWING / PASTY MATERIALS BY MEANS OF A SECTION THAT CAN BE VIBRATED IN THE DIRECTION OF CONVEYANCE
MACHINE POUR USINER DES MASSES FLUIDES / PATEUSES AU MOYEN D'UN DISPOSITIF POUVANT VIBRER DANS LE SENS DE TRANSPORT

(30) Priorität: 14.01.2002 DE 10201215; 21.01.2002 DE 10202238
(43) Veröffentlichungstag der Anmeldung: 13.10.2004
(73) Patentinhaber: Bühler AG, 9240 Uzwil (CH)
(72) Erfinder: OURIEV, Boris, CH-9244 Niederuzwil (CH)
(74) Vertreter: Wilming, Martin
(86) Internationale Anmeldenummer: PCT/CH2002/000678
(87) Internationale Veröffentlichungsnummer: WO 2003/057449

(56) Entgegenhaltungen:
- EP-A- 0 612 603
- GB-A- 1 171 735
- SU-A- 856 833
- SU-A- 1 445 676

## Beschreibung

Die vorliegende Erfindung bezieht sich auf eine Maschine zum Bearbeiten bzw. Verarbeiten eines förderbaren Materials, insbesondere einer fliessfähigen oder pastösen Masse oder eines Schüttguts, wobei die Maschine mindestens einen Durchlassabschnitt mIt mindestens einem Durchlass aufweist, durch den das zu bearbeitende bzw. verarbeitende förderbare Material entlang einer Förderrichtung transportierbar ist.

In derartigen Maschinen wird das Material transportiert und bearbeitet bzw, verarbeitet. Bei viskosen oder pastösen Massen, wie z.B. Schokolade, Teig oder Thermoplasten/Elastomeren findet der Transport z.B. mittels eines Extruders statt. Die Bearbeitung bzw. Verarbeitung findet je nach Material in Mischern, Walzwerken, Mühlen oder Extrudern statt. Dabei erfolgt u.a. eine Scherung und/oder Dehnung und somit eine Durchmischung des Materials. Im Falle von Emulsionen (z.B. Schokolade) oder Suspensionen (Nassvermahlung) erfolgt eine Zerkleinerung der emulgierten bzw. suspendierten Partikel. Meistens ist man bestrebt, die rheologischen Eigenschaften des Materials mehr oder weniger dauerhaft zu verändern, indem man z.B. die Grössenverteilung emulgierter oder suspendierter Teilchen, den Grad der Vernetzung von Strukturen oder die mittlere Länge von Molekülen verändert. Derartige Veränderungen erfolgen durch mechanische, thermische, chemische oder enzymatische Einwirkung.

Der Transport und die Bearbeitung/Verarbeitung viskoser oder pastöser Massen, aber auch der Transport von Schüttgütern erfordern viel Energie und zum Teil enteprechend gross ausgelegte Maschinen.

Die EP 0 612 603 A1 beschreibt ein System und ein Verfahren zum Erleichtern des Durchflusses eines Elastomermaterials durch eine Düse. Hierfür wird eine Düse eines Extruders und somit ein in der Düse ausgebildeter Durchlass mittels Ultraschall vibriert, wodurch die Relbung zwischen dem Material und dem Durchlass herabgesetzt wird. Die Vibration wird mittels einer elektrischen Schaltung erzeugt, die ein elektrisches Schwlngungssignal an piezoelektrische Wandler anlegt, die dann in mechanische Schwingungen versetzt werden, die auf den Durchlass übertragen werden.

Die SU 856 833 A1 sowie die SU 1 445 676 A1 offenbaren ein ähnliches System. Auch hier sind ein oder mehrere Vibrationsemitter vorgesehen, die an der Innenwand eines Extrudergehäuses ebenfalls im Austragungsbereich des Extruders angebracht sind.

Die GB 1 171 735 A beschreibt eine Spinnpackung, die stromauf von einer Düsenplatte angeordnet ist, mit der aus Polymerisaten Fäden gesponnen werden. Die Polymeri- - satschmeize muss dafür durch die Düsenlöcher der Düsenplatte gepumpt werden. In der Spinnpackung sind Kugeln enthalten, die ein Kugelbett bilden, das für eine Vergleichmässigung der Schmelzeströmung über die gesamte Düsenplatte sorgt, damit die Verweilzeit der Polymerisatschmelze in dem gesamten Spinnkopf über die Fläche der Düsenplatte so einheitlich wie möglich ist und vor allem Totbereiche zwischen den verglichen mit ihrem Durchmesser relativ weit voneinander beabstandeten Düsenlöchern vermieden werden.

Bei all diesen bekannten Lösungsansätzen des Stands der Technik werden lediglich über die Oberfläche einer vibrierenden Düse oder eines anderen vibrierenden Bereichs im Innenraum eines Gehäuses in ein viskoses oder viskoelastisches Fluid (Suspension, Emulsion bzw. Thermoplast-Schmelze, Elastomer) Schwingungen eingetragen, um die rheologischen Eigenschaften des Fluids zu beeinflussen.

Die GB 1 171 735 A erwähnt zwar Kugeln in einer Spinnpackung. Diese Kugeln bilden jedoch innerhalb der Spinnpackung ein "Kugelbett", das nicht vibriert wird, sondern lediglich eine Vergleichmäsigung der Verweilzeit des durch das Kugelbett strömenden Fluids bewirkt. Man ist bemüht, den sehr labilen Spinnvorgang in keinerlei Weise und schon gar nicht durch Vibrationen zu stören.

Der Erfindung liegt daher die Aufgabe zugrunde, bei der Bearbeitung/Verarbeitung und vor allem beim Transport der viskosen oder viskoelastischen, pastösen Massen in der Maschine Energie und/oder Maschinengrösse einzusparen.

Diese Aufgabe wird dadurch gelöst, dass bei der eingangs genannten Maschine der mindestens eine Durchlassabschnitt ("Vibrokanal", "Vibroabschniit") mindestens einen Teilbereich eines Kanals der Maschine bildet und relativ zum Kanal der Maschine beweglich gelagert ist, wobei der mindestens eine Durchlassabschnitt mit mindestens einer Quelle für Schwingungen gekoppelt ist, durch die er relativ zum Kanal der Maschine in mechanische Schwingungen versetzbar ist.

Bei einer weiteren vorteilhaften Ausführung der erfindungsgemässen Maschine ist der mindestens eine Durchlassabschnitt in dem Kanal der Maschine ein mit vibrierbaren Kollisionskörpern gefüllter Volumenabschnitt des Kanals. Er bildet eine Kollisionskörper-Packung, in der die Kollisionskörper mehr oder weniger dicht gepackt sind. Die mit der Kollisionskörper-Packung gekoppelte Schwingungsquelle überträgt über die Wand der Packung Stösse auf die Kollisionskörper in der Packung und versetzt die Kollisionskörper in Vibration. Das in dem Durchlassabschnitt zwischen den Kollisionskörpern hindurchtransportierte Material wird durch die Bewegung der Kollisionskörper im wesentlichen auf zwei Arten bearbeitet. Einerseits bewirken Stösse zwischen den Kollisionskörpern eine Dispersion bzw. Desagglomeration emulgierter oder suspendierter Partikel des Materials, die sich gerade zwischen den einander stossenden Kollisionskörpern befinden. Andererseits führen (nicht stossende) Relativbewegungen benachbarter Kollisionskörper zu einem Schergefälle und somit zu einer Scherung und/oder Dehnung des Materials, wodurch dessen Viskosität verringert wird.

Zweckmässigerweise bilden die Kollisionskörper eine dichtestmögliche Packung mit Hohlräumen zwischen einander berührenden Kollisionskörpern, wobei die Kollisionskörper insbesondere verschiedene Grössen und/oder verschiedens Formen haben. Bei dieser Ausführung sind einerseits viele Kollisionskörper in der Packung, was zu einer grossen Zahl von Stössen führt, Andererseits sind die mittleren Abstände benachbarter Kollisionskörper klein, wodurch bei gegebener Stossenergie ein grosses Schergefälle und Dehngefälle vorliegt.

Die Kollisionskörper können je nach Bedarf mindestens eine der folgenden Formen haben: Kugelform, Polyederform, Stabform, insbesondere Zylindederform oder Prismenform. Bei der Kugelform erhält man sehr hohe punktuell wirkende Stosskräfte, durch die auch sehr stabile Agglomerate zerbrochen werden können, allerdings bei relativ geringer Wahrscheinlichkeit, eine Agglomerat zu treffen. Die Polyederform ermöglicht relativ schwache flächig oder kantig wirkende Stosskräfte, wobei jedoch hier die Wahrscheinlichkeit, ein Agglomerat zu treffen, viel höher als bei der Kugelform ist. Ausserdem ist mit einer höheren Scherwirkung als bei der Kugelform zu rechnen. Bei den stabförmi, gen Kollisionskörpern lassen sich Vibrationen mit Vorzugsrichtung in die Kollisionskörper-Packung einleiten. So können z.B. die Stäbe parallel zueinander in der Packung angeordnet sein und die Stossanregung derart erfolgen, dass vorwiegend eine Hin- und Herbewegung der Stäbe entlang der Stabrichtung erfolgt. Auf diese Weise dominiert die Scherwirkung zwischen den Stäben gegenüber der Stosswirkung zwischen den Stäben. Bei vertikaler Anordnung des Durchlassabschnitts mit ebenfalls vertikal angeordneten Stäben bevorzugt man die Prismenform, während man bei horizontaler Anordnung des Durchlassabschnitts die Zylinderform bevorzugt.

Vorzugsweise besteht mindestens ein Teil der Kollisionskörper aus einem elektrisch leitfähigen Material und die Quelle für Schwingungen ist eine Quelle für elektromagnetische Schwingungen, wobei sich die elektrisch leitfähigen Kollisionskörper durch die erzeugten elektromagnetischen Wechselfelder zu mechanischen Schwingungen, und/oder Bewegungen anregen lassen. Diese Ausführung ermöglicht eine besonders elegante kontaktlose induktive Kopplung der Schwingungsquelle an die Kollisionakörper.

Neben den genannten mechanischen, thermischen, chemischen und enzymatischen Einwirkungen auf das Material, die vorwiegend zu dauerhaften Veränderungen des Materials führen, ermöglicht die erfindungsgemässe Maschine nun auch eine Beeinflussung des Materials während seines Transports durch den Dumhlaesabschnitt, der mindestens einen Teilbereich der Maschine einnimmt. Durch den in mechanische Schwingungen versetzten Durchlassabschnitt der Maschine wird das durch den Durchlass transportierte Material ebenfalls in Schwingungen versetzt, durch die dessen rheologische Eigenschaften zumindest während des Andauerns der mechanischen Schwingungen verändert werden.

So kann z.B. das Vibrieren des durch die Maschine transportierten und zu vorarbeitenden Materials dessen effektive ("scheinbare") Viskosität während des Vibrierens herabsetzen, wodurch erforderliche Förder- oder Pumpleistung eingespart werden kann. Andererseits kann das Vibrieren des Materials auch dazu beitragen, im Material emulgierte oder suspendierte Partikel zu desagglomerieren. Diese Auswirkung findet zumindest während des Vibrierens statt und kann ggf. noch nach dem Vibrieren andauern.

Vorzugsweise ist der mindestens eine Durchtassabschnitt relativ zum Kanal der Maschine mittels elastischen Mitteln gelagert. Dies ermöglicht eine Vibration des gesamten Durchlassabschnitts relativ zum Rest des Kanals der Maschine. Wählt man für die Masse des vibrierbaren Durchlassabschnitts nur einen Bruchteil der Masse der übrigen miteinander fest verbundenen Maschinenteile, so ist die Schwingungsamplitude des vibrierenden Durchlassabschnitts entsprechend um ein Mehrfaches grösser als die Schwingungsamplitude der gesamten Maschine einschliesslich Gehäuse.

Um ein "Mitschwingen" der restlichen Maschinenbestandteile beim Vibrieren des Durchlassabschnitts gering zu halten, können auch zwischen dem mindestens einen Durchlassabschnitt und dem Kanal der Maschine dämpfende Mittel angeordnet werden, wobei auch insbesondere das Fluid dämpfend wirken kann.

Bei einer besonders vorteilhaften Ausführung ist der mindestens eine Durchlassabschnitt und der Kanal der Maschine schwingungsmässig entkoppelt. Hierzu ist z.B. der Durchlassabschnitt in mindestens zwei am Rest der Maschine gleitend gelagerte Hälften gleicher Masse unterteilt, zwischen denen jeweils eine Quelle für mechanische Schwingungen angeordnet und mit der jeweiligen Hälfte des Durchlassabschnitts starr verbunden ist. So können die beiden Hälften gegenphasig schwingen, und alle von den vibrierenden Teilen des Durchlassabschnitts auf den Rest der Maschine übertragenen Kräfte neutralisieren sich.

Vorzugsweise ist der mindestens eine Durchlassabschnitt durch die mindestens eine Quelle in solche Schwingungen versetzbar, die eine Tangential- und/oder Normalkomponente bezüglich der dem förderbaren Material zugewandten Oberfläche des mindestens einen Durchlasses aufweisen. Durch die Tangentialkomponente lässt sich die Reibung an der Grenzfläche zwischen dem Durchlass und dem transportierten Material herabsetzen, was einerseits zu einer Energieeinsparung und andererseits zu einer Vereinheitlichung der Verweilzeit des Materials im Durchlassabschnitt führt (Parabelartiges Profil wird zu pfropfenartigem Profil). Die Normalkomponente kann Längswellen ins Material abgeben und eignet sich besonders für die Beeinflussung der Volumeneigenschaften des Materials.

Es können auch mehrere Durchlassabschnitte in mindestens einem Teilbereich des Kanals der Maschine entlang der Förderrichtung des Kanals aufeinanderfolgend angeordnet sein, wobei bei Bedarf zumindest einige der mehreren aufeinanderfolgenden Durchlassabschnitte entlang der Förderrichtung beabstandet angeordnet sein können. Dies ermöglicht eine mehrstufige Vibrationsbehandlung des Materials auf seinem Weg durch die Maschine ggf. mit anderen Bearbeitungs-/Verarbeitungsschritten, wie z.B. Schritten für die Zugabe oder das Entfernen von Stoffkomponenten, Energie etc. (Zudosierung, Entgasung, Erhitzung, Abkühtung).

Wie schon weiter oben erwähnt, können die mehreren Durchlassabschnitte zueinander identisch sein. Dies ist bei gegenphasiger Schwingungsanregung vorteilhaft, da dann praktisch keine Vibration auf den Maschinenrahmen übertragen wird.

Bei Bedarf können auch zumindest einige der mehreren Durchlassabschnitte voneinander verschieden sein. Dies ermöglicht dann eine unterschiedliche Vibrationsbehandlung des Materials in den jeweiligen Durchlassabschnitten.

Die mehreren Durchlassabschnitte können in zueinander identische Schwingungen oder in voneinander verschiedene Schwingungen versetzt werden, wobei die mindestens eine Quelle für mechanische Schwingungen z.B. ein Vibrator ist, der gedämpfte erzwungene Schwingungen des mindestens einen Durchlassabschnitts erzeugt. Die erzwungenen Schwingungen können dabei Hin- und Herbewegungen des einen oder der mehreren Durchlassabschnitte sein und/oder können über das gesamte Volumen eines Durchlassabschnitts verteilte Schwingungen sein. Ausserdem kann mit einer einzigen oder einigen wenigen gezielten Frequenzen, vorzugsweise mit jeweils grosser Amplitude, vibriert werden, um z.B. materialspezifische Wirkungen in dem zu behandelnden Material zu erzielen. Andererseits kann auch eine Anregung über einen grossen Frequenzbereich erfolgen. Hierfür ist die mindestens eine Quelle für mechanische Schwingungen eine Schlagvorrichtung, die gedämpfte Stossanregungen des mindestens einen Durchlassabschnitts erzeugt.

Die erfindungsgemässe Maschine kann auch an mehreren Stellen mit Quellen für mechanische Schwingungen bestückt sein. Dies ermöglicht es, dem durch die Maschine transportierten Material ganz gezielte dreidimensionale, ggf. örtlich veränderliche Vibrations-Interferenzmuster bzw. stehende Wellen aufzuprägen, was wiederum vorteilhaft oder zwingend erforderlich für die gezielte Beeinflussung der rheologischen Eigenschaften sein kann. So kann z.B. durch gleichphasige Überlagerung von Schwingungen, die von mehreren Quellen stammen können, an einem Ort in dem zu bearbeitenden Material eine ausreichend grosse Schwingungsamplitude erzeugt werden, um z.B. die Desagglomerierung von Partikeln an diesem Ort zu erzielen. In diesem Zusammenhang ist eine Anregung der Partikel mit ihrer Resonanzfrequenz besonders vorteilhaft.

Zweckmässigerweise ist die mindestens eine Quelle für mechanische Schwingungen unabhängig vom Betriebszustand der Maschine ansteuerbar, wobei vorzugsweise mehrere Quellen für mechanische Schwingungen voneinander gesondert ansteuerbar sind. Durch Änderung der relativen Phasen der Schwingungen der mehreren Quellen lassen sich dann die Orte besonders intensiver Vibration, d.h. das dreidimensionale Interferenzmuster mit seinen "Brennpunkten, Brennlinien und Brennebenen" hoher Amplitude bewegen und somit das Material in seinem ganzen Volumen durchdringen und vibratorisch bearbeiten.

Besonders vorteilhaft ist es, wenn in der erfindungsgemässen Maschine mindestens eine erste Einrichtung zum Erfassen der rheologischen Eigenschaften des förderbaren Materials stromab von dem jeweiligen Durchlassabschnitt angeordnet ist zur Erzeugung erster Signale an einem ersten Signalausgang, welche die physikalisch-chemischen, insbesondere rheologischen Eigenschaften des Materials stromab von dem Durchlassabschnitt kennzeichnen. Vorzugsweise ist ausserdem mindestens eine zweite Einrichtung zum Erfassen der rheologischen Eigenschaften des förderbaren Materials stromauf von dem jeweiligen Durchlassabschnitt angeordnet zur Erzeugung zweiter Signale an einem zweiten Signalausgang, welche die physikalisch-chemischen, insbesondere rheologischen Eigenschaften des Materials stromauf von dem Durchlassabschnitt kennzeichnen. Dies ermöglicht einen Vergleich der Rheologie-Signale des ersten und/oder des zweiten Signalausgangs mit jeweiligen Rheologie-Referenzsignalen, die bestimmte rheologische Eigenschaften kennzeichnen, und/oder einen Vergleich der Rheologie-Signale des ersten und des zweiten Signalausgangs miteinander, wobei in Abhängigkeit von dem Ergebnis des Vergleichs der Signale innerhalb eines Regelkreises eine Rückkopplung erfolgt zur Ansteuerung der mindestens einen Quelle für mechanische Schwingungen. Somit können die rheologischen Eigenschaften (Strömungseigenschaften und Materialeigenschaften) des Material während dessen Bearbeitung/Verarbeitung ständig überwacht und konstantgehalten werden.

In einer speziellen Ausführung verläuft der Kanal der Maschine und der mindestens eine Durchlass des Durchlassabschnitts vertikal oder horizontal.

Die Maschine kann z.B. ein Extruder und der mindestens eine Durchlaasabschnitt eine Düse, insbesondere die Extrusionsdüse, des Extruders sein. Die vibrierende Düse trägt dann ebenfalls zur Beeinflussung der rheologischen Eigenschaften des Materials und zur Verringerung des Düsenwiderstands bei.

Die Maschine kann auch ein Extruder und der mindestens eine Durchlassabschnitt ein Schmelzefilter des Extruders sein. Die Vibration des Schmelzefilters sorgt dann dafür, dass dieses nicht verstopft.

In einem weiteren speziellen Fall ist die Maschine eine Druckgussmaschine und der mindestens eine Durchlassabschnitt eine Konditionierungszelle der Druckgussmaschine. Durch die Vibration der Konditionierungszelle kann die punktuelle Kristallisierung innerhalb der zu giessenden Schmelze beeinflusst werden (Konzentration und/oder Grössenverteilung der Kristallkeime und/oder Kristallite).

Weitere Vorteile, Merkmale und Anwendungsmöglichkeiten der Erfindung ergeben sich aus der nun folgenden Beschreibung nicht einschränkend aufzufassender Ausführungsbeispiele der Erfindung anhand der Zeichnung, wobei:
- Fig. 1 A: den prinzipiellen Aufbau eines erfindungsrelevanten Teilbereichs der erfindungsgemässen Maschine im Längsschnitt anhand eines ersten Ausführungsbeispiels schematisch zeigt;
- Fig. 1 B: den prinzipiellen Aufbau des in Fig. 1A gezeigten Teilbereichs im Querschnitt entlang der Ebene X-X schematisch zeigt;
- Fig. 2: ein zweites Ausführungsbeispiel eines erfindungsrelevanten Teilbereichs der erfindungsgemässen Maschine schematisch zeigt;
- Fig. 3: ein dritten Ausführungsbeispiel eines erfindungsrelevanten Teilbereichs der erfindungsgemässen Maschine schematisch zeigt; und
- Fig. 4: ein vierten Ausführungsbeispiel eines erfindungsrelevanten Teilbereichs der erfindungsgemässen Maschine schematisch zeigt.

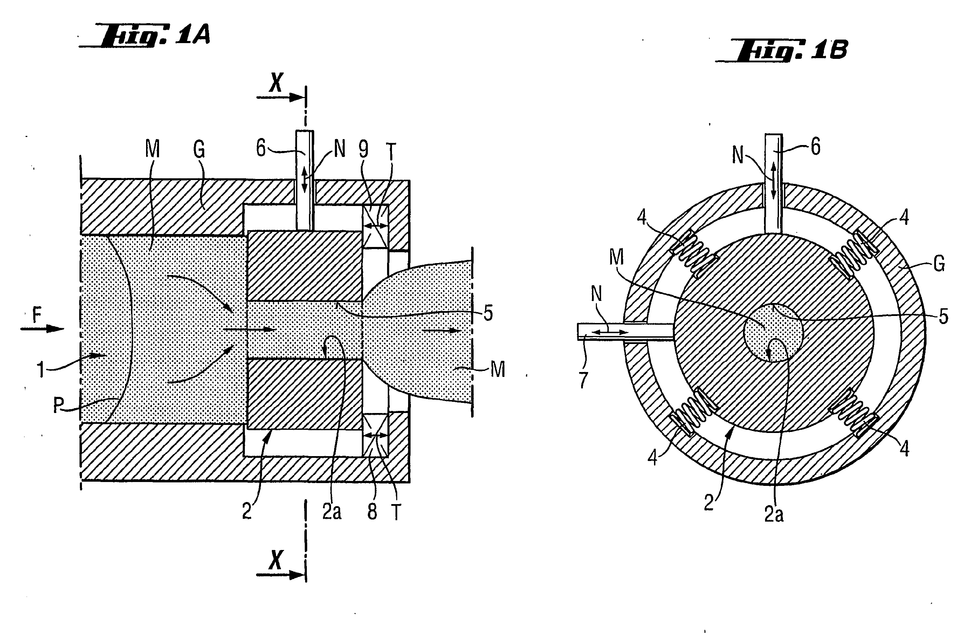

Fig. 1A zeigt schematisch anhand eines ersten Ausführungsbeispiels den prinzipiellen Aufbau der erfindungsgemässen Maschine im Längsschnitt für einen erfindungsrelevanten Teilbereich der Maschine. Die Maschine weisst ein Gehäuse G auf, indem sich ein Kanal 1 erstreckt. Ein Teilbereich des Kanals 1 wird durch einen Durchlassabschnitt 2 gebildet, der einen mittigen Durchlass 2a aufweist. Im vorliegenden Ausführungsbeispiel ist dieser Durchlassabschnitt 2 die Düse eines Extruders oder einer Spritzgiessmaschine. Das zu bearbeitende bzw. verarbeitende transportierte Material M bewegt sich entlang der Förderrichtung F durch die Maschine. Der Durchlassabschnitt bzw. die Düse 2 ist bezüglich des Gehäuses G sowohl in der radialen Richtung, das heisst senkrecht zur Förderrichtung F, als auch in der axialen Richtung, das heisst parallel zur Förderrichtung F, beweglich gelagert. Ausserdem sind insgesamt vier Quellen 6, 7, 8, 9 für mechanische Schwingungen vorgesehen. Die Schwingungsquellen 6 und 7 (siehe Fig. 1 B) sind im Gehäuse G gelagert und können jeweils eine radiale Schwingungskomponente auf den Durchlassabschnitt 2 übertragen. Diese radiale Schwingungskomponente führt zu einer Normalkomponente N an der inneren Oberfläche 5 des Durchlasses 2a. Die Schwingungsquellen 8 und 9 sind ebenfalls am Gehäuse G gelagert und können eine axiale Schwingungskomponente auf den Durchlassabschnitt 2 übertragen. Diese axiale Schwingungskomponente bildet eine Tangentialkomponente T der Schwingung an der inneren Oberfläche 5 des Durchlasses 2a. Es ist auch möglich, dass der Durchlassabschnitt 2 selbst die Schwingungsquelle, insbesondere ein piezoelektrisches Element ist.

Zur Verdeutlichung des Strömungsverhaltens des Materials M ist ein Geschwindigkeitsprofil P im Kanal 1 angedeutet.

Fig. 1B zeigt schematisch den prinzipiellen Aufbau des erfindungsrelevanten Teilbereichs der erfindungsgemässen Maschine von Fig. 1A im Querschnitt entlang der Ebene X-X. Zusätzlich zur Fig. 1A erkennt man hier vier in Umfangsrichtung gleichmässig verteilte elastische Mittel 4, durch die der Durchlassabschnitt 2 am Gehäuse G gelagert ist.

Die Gesamtheit der Schwingungsquellen 6, 7, 8, 9 ermöglicht je nach der Ansteuerung der einzelnen Schwingungsquellen den Eintrag beliebig einstellbarer Schwingungsmuster in das durch den Durchlass 2a hindurchtretende Material M. So können z.B. die in der Einleitung beschriebenen Interferenzmuster bzw. stehenden Wellen mit sehr grosser Schwingungsamplitude in dem Material M erzeugt werden, wodurch die rheologischen Eigenschaften des Materials M gezielt beeinflusst werden können. Eine derartige Beeinflussung ist z.B. die Desagglomerierung suspendierter oder emulgierter Teilchen in einer Suspension bzw. Emulsion oder die Beeinflussung der Struktur von Kristallkeimen in einer Schmelze.

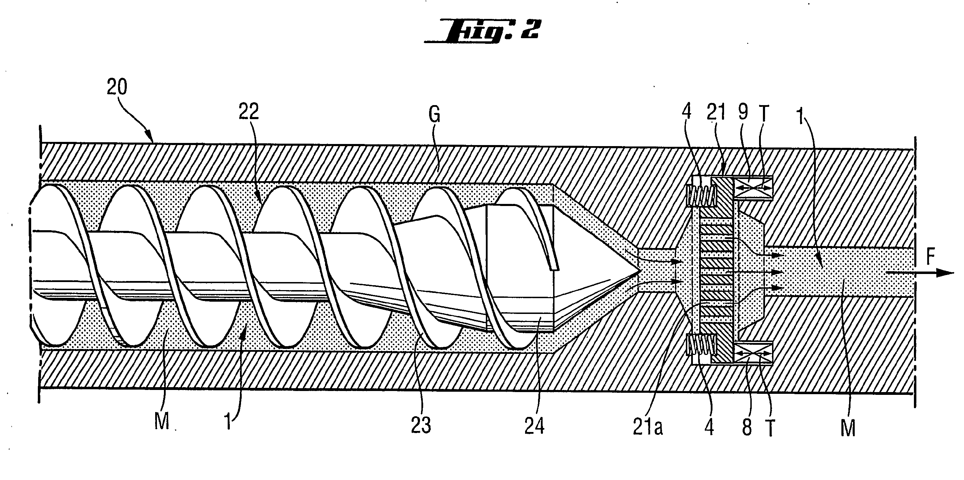

Fig. 2 zeigt schematisch ein zweites Ausführungsbeispiel eines erfindungsrelevanten Teilbereichs der erfindungsgemässen Maschine. Es handelt sich um einen Extruder 20 mit einem Gehäuse G, in dem eine Extruderschnecke 22 stromauf von einem vibrierbaren Schmelzefilter 21 im Kanal 1 des Exruders 20 angeordnet ist. Die Extruderschnecke 22 weist einen Schneckensteg 23 sowie einen Schneckenkopf 24 auf. Das vibrierbare Schmelzefilter 21 ist z.B. ein Polymerfilter und enthält eine Vielzahl Durchtritte 21 a. Das Polymerfilter 21 ist mit Hilfe von Federn 4 an dem Gehäuse G federnd gelagert. Ausserdem sind zwei Schwingungsquellen 8, 9 vorgesehen, die in dem Gehäuse G gelagert sind und das Polymerfilter 21 kontaktieren. In dem vorliegenden Ausführungsbeispiels sind die Schwingungsquellen 8, 9 so ausgelegt, dass sie eine bezüglich der inneren Oberflächen der Durchtritte 21a tangentiale Schwingungskomponente auf das Polymerfilter 21 übertragen. Dies beugt eine Verstopfung der Durchtritte 21a des Polymerfilters 21 vor.

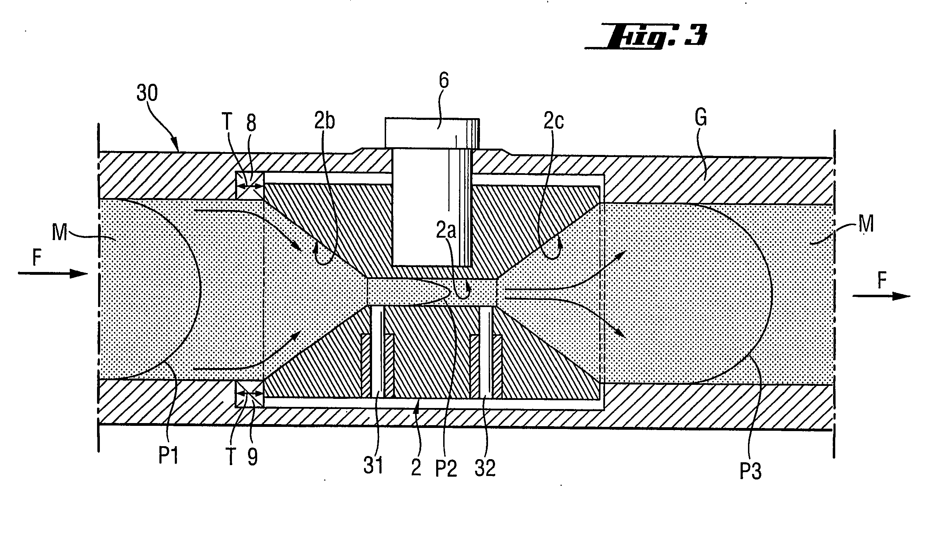

Fig. 3 zeigt schematisch ein drittes Ausführungsbeispiel eines erfindungsrelevanten Teilbereichs der erfindungsgemässen Maschine. Es handelt sich dabei um einen Teil einer Giessmaschine 30, in dem eine Beeinflussung der Kristallisation angestrebt wird, um die Struktur, Grösse und Anzahl von Kristallkeimen in der Schmelze zu beeinflussen. Die Giessmaschine kann z.B. eine Maschine zum Herstellen von Schokoladehülsen aus geschmolzener Schokolade sein, oder sie kann z.B. eine Druckgussmaschine zur Herstellung von Gussteilen aus Aluminium oder Aluminium/Magnesium-Legierungen sein. Auch hier verläuft im Inneren eines Gehäuses G ein Kanal 1 mit einem Durchlass, der aus mehreren Teilbereichen 2a, 2b und 2c besteht. An der stromaufseitigen Seite des Durchlassabschnitts 2 befindet sich ein entlang der Förderrichtung F konisch konvergierender Teilbereich 2b des Durchlasses, und an der stromabseitigen Seite des Durchlassabschnitts 2 befindet sich ein entlang der Förderrichtung F konisch divergierender Teilbereich 2c. Die beiden Konusspitzen des konvergierenden Teilbereichs 2b und des divergierenden Teilbereichs 2c sind durch einen zylindrischen Teilbereich 2a miteinander verbunden. Zur Verdeutlichung der laminaren Strömungsverhältnisse ist an mehreren Stellen des Kanals 1 das jeweilige Geschwindigkeitsprofil P1, P2 und P3 eingezeichnet. Die Pfeile im Kanal 1 verdeutlichen ebenfalls die Strömungsverhältnisse. Insgesamt sind drei Schwingungsquellen 6, 8 und 9 vorgesehen. Die Schwingungsquelle 6 erzeugt eine mechanische Welle, die vorwiegend den zylindrischen Teilbereich 2a des Durchlasses erfasst. Die Schwingungsquellen 8 und 9 bewirken eine tangentiale Schwingungskomponente T des Durchlassabschnitts 2. An der inneren Oberfläche des zylindrischen Kanals 2a überlagern sich daher sowohl normale als auch tangentiale Schwingungskomponenten. Durch individuelle Einstellung der Phase und Amplitude der jeweiligen Schwingungsquelle 6, 8 und 9 lassen sich somit zahlreiche Schwingungszustände (z.B. Interferenzmuster, stehende Wellen) in dem Material M erzeugen, das sich durch den zylindrischen Teilbereich 2a des Durchlassabschnitts 2 bewegt. Das vorliegende Ausführungsbeispiel ermöglicht zusätzlich zur Vibrationsbehandlung die Erzeugung einer Dehnströmung in dem stromaufseitigen konisch konvergierenden Teilbereich 2b des Durchlassabschnitts 2. Somit eignet sich das vorliegende Ausführungsbeispiel auch zur Desagglomerierung suspendierter oder emulgierter Partikel in einer Suspension bzw. Emulsion. Besonders vorteilhaft kann das vorliegende Ausführungsbeispiel daher zur Vorbereitung temperierter Schokolade vor deren Giessvorgang verwendet werden. Eine derartige "Konditionierungszelle" für temperierte Schokolade ermöglicht daher eine beliebige Kombination von Dehnströmung (Teilbereiche 2b und 2c des Durchlassabschnitts 2), Scherströmung (Teilbereich 2a des Durchlassabschnitts 2) und Vibrationsfeld (vorwiegend Teilbereich 2a des Durchlassabschnitts). In den Bereichen der Dehnströmung findet in erster Linie eine Desagglomerierung suspendierter bzw. emulgierter Teilchen statt, während im Bereich der Scherströmung vorwiegend eine Beeinflussung der Struktur der Kristallkeime stattfindet.

In dem Durchlassabschnitt 2 sind ausserdem zwei Drucksensoren 31 und 32 vorgesehen. Der erste Sensor 31 befindet sich am stromaufseitigen Ende des zylindrischen Teilbereichs 2a, während der zweite Drucksensor sich am stromabseitigen Ende des zylindrischen Teilbereichs 2a befindet. Die beiden Drucksensoren 31 und 32 ermöglichen das Erfassen einer Druckdifferenz zwischen dem stromaufseitigen und dem stromabseitigen Ende des zylindrischen Teilbereichs 2a des Durchlassabschnitts 2, woraus sich die Wand-Scherspannung bestimmen lässt. Unter Verwendung von Information über die Volumen-Durchflussgeschwindigkeit des Materials kann damit die Wand-Schergeschwindigkeit berechnet werden. Es ergibt sich daher eine Möglichkeit der rheologischen Inline-Messung in dem zylindrischen Teilbereich 2a. Diese Messung ermöglicht eine kontinuierliche Überwachung der Scherviskosität. Dies z.B. ist für die Steuerung des Schokolade- oder Aluminium-Kristallisationsprozesses wichtig.

Neben der erwähnten zylindersymmetrischen Geometrie mit jeweils kreisförmigem Querschnitt im Kanal 1 des zweiten Ausführungsbeispiels ist auch eine Geometrie mit rechteckförmigem Querschnitt denkbar. Besonders vorteilhaft ist eine Geometrie, bei der die eine Rechteckseite sehr gross und die andere Rechteckseite sehr klein ist. Auf diese Weise erhält man an Stelle des zylindrischen Teilbereichs 2a einen schlitzförmigen Teilbereich 2a, indem ebenfalls ein sehr hohes Schergefälle erzeugbar ist.

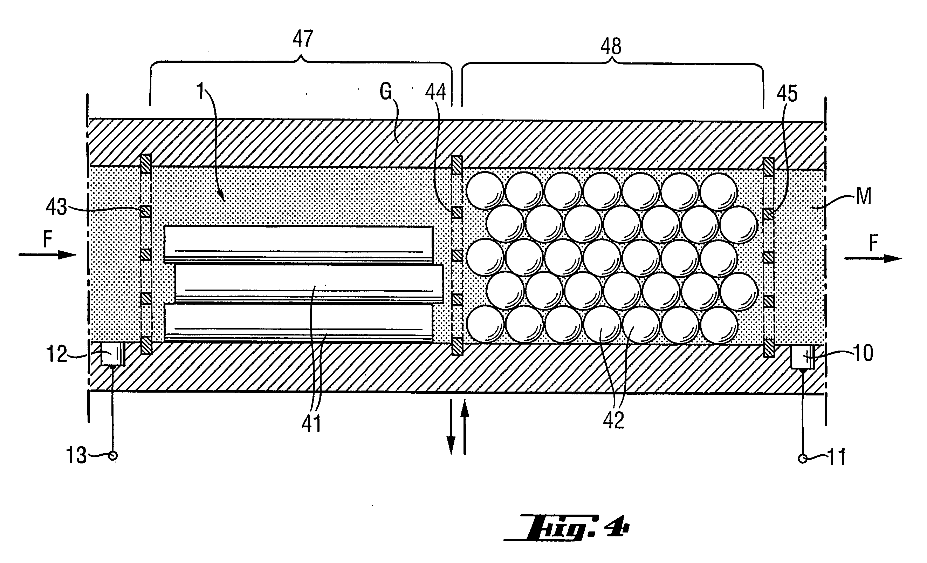

Fig. 4 zeigt schematisch ein viertes Ausführungsbeispiel eines erfindungsrelevanten Teilbereichs der erfindungsgemässen Maschine. Auch hier umgibt das Gehäuse G einen Kanal 1, durch den das Material M entlang der Förderrichtung F gepumpt wird. Der erfindungsrelevante Teilbereich des Kanals 1 weist drei Gitter 43, 44, 45 auf, die entlang der Förderrichtung F beabstandet zueinander in dem Kanal 1 feststehend angeordnet sind. Auf diese Weise wird zwischen den Gittern 43 und 44 ein erster Teilbereich 47 gebildet, während zwischen den Gittern 44 und 45 ein zweiter Teilbereich 48 gebildet wird. Im Innern des ersten Teilbereichs 47 sind stabförmige Kollisionskörper 41 angeordnet, während im zweiten Teilbereich 48 kugelförmige Kollisionskörper 42 angeordnet sind. Durch eine (nicht gezeigte) Schwingungsquelle wird das gesamte Gehäuse G vibriert, so dass auch die in den jeweiligen Teilbereichen 47 und 48 enthaltenden Kollisionskörper (Stäbe bzw. Kugeln) in rasche Hin- und Herbewegungen versetzt werden.

Im ersten Teilbereich 47 mit den stabförmigen Kollisionskörpern 41 überwiegt die Scherwirkung, während in dem zweiten Teilbereich 48 mit den kugelförmigen Kollisionskörpern 42 die Schlagwirkung überwiegt. Durch die Grösse, Form und Anzahl der Kollisionskörper 41 und 42 in den jeweiligen Teilbereichen 47 bzw. 48 lassen sich daher in Verbindung mit der Frequenz der Anregungsschwingung massgeschneiderte Behandlungsbedingungen für das jeweils zu bearbeitende/verarbeitende Material M bei dessen Transport durch die beiden Teilbereiche 47 und 48 erzeugen.

In dem vorliegenden vierten Ausführungsbeispiel wird der Durchlassabschnitt durch den ersten Teilbereich 47 (Scherbereich zur Verringerung der Viskosität) und den zweiten Teilbereich 48 (Schlagbereich mit dispersiver und distibutiver Wirkung) des Kanals 1 gebildet. Stromab von dem Gitter 45 befindet sich im Kanal 1 eine erste Einrichtung 10 zum Erfassen der rheologischen Eigenschaften des Materials nach dessen Scherbehandlung und Schlagbehandlung. Stromauf von dem Gitter 43 befindet sich eine zweite Einrichtung 12 zur Erfassung der rheologischen Eigenschaften des Materials vor dessen Scherbehandlung und Schlagbehandlung. Die erste Erfassungseinrichtung 10 ist mit einem ersten Signalausgang 11 verbunden, während die zweite Erfassungseinrichtung 12 mit einem zweiten Signalausgang 13 verbunden ist. Die an den Ausgängen 11 und 13 erzeugten Signale kennzeichnen die physikalisch-chemischen, insbesondere rheologischen Eigenschaften des Materials M stromab bzw. stromauf von der Behandlung des Materials durch Scherung und/oder Dehnung und lung des Materials durch Scherung und/oder Dehnung und Schlagwirkung. Ein Vergleich der so erfassten rheologischen Eigenschaften nach bzw. vor der Behandlung des Materials wird mit Hilfe eines (nicht gezeigten Regelkreises) zur Ansteuerung der mindestens einen Schwingungsquelle (nicht gezeigt) verwendet.

Anstatt der Schwingungsanregung des Gehäuses G mit den in ihm enthaltenden Kollisionskörpern 41 und 42 durch direkte mechanische Kopplung einer Quelle für mechanische Schwingungen (nicht gezeigt) an das Gehäuse G kann auch eine berührungslose induktive Ankopplung einer Quelle für elektromagnetische Schwingungen an die Kollisionskörper 41 und 42 erfolgen. Bedingung hierfür ist jedoch, dass zumindest ein Teil der Kollisionskörper 41 bzw. der Kollisionskörper 42 elektrisch leitend sind. Diese elegante Art des Vibrierens der Kollisionskörper 41 bzw. 42 hat den Vorteil, dass das Gehäuse G selbst nicht vibriert werden muss.

### Bezugszeichenliste

- 1: Kanal
- 2: Durchlassabschnitt 2a des Durchlasses
- 2a, 2b, 2c: Durchlass-Teilbereiche
- 4: elastisches Mittel/Feder
- 5: innere Oberfläche des Durchlasses
- 6, 7, 8, 9: Quelle für Schwingungen
- G: Gehäuse
- T: Tangentialkomponente der Schwingungen
- N: Normalkomponente der Schwingungen
- F: Förderrichtung des Materials
- M: Material
- P, P1, P2, P3: Geschwindigkeitsprofile des transportierten Materials
- 10: 1. Einrichtung zum Erfassen der rheologischen Eigenschaften des Materials
- 11: 1. Signalausgang
- 12: 2. Einrichtung zum Erfassen der rheologischen Eigenschaften des Materials
- 13: 2. Signalausgang
- 20: Extruder
- 21: Schmelzefilter/Polymerfilter
- 21 a: Durchtritt im Schmelzefilter
- 22: Extruderschnecke
- 23: Schneckensteg
- 24: Schneckenkopf
- 30: Gussmaschine (z.B. für Schokolade oder Aluminium)
- 31,32: Drucksensor
- 41: Kollisionskörper (Stab)
- 42: Kollisionskörper (Kugel)
- 43, 44, 45: Gitter
- 47: 1. Teilbereich des Durchlassabschnitts
- 48: 2. Teilbereich des Durchlassabschnitts

## Patentansprüche

1. Maschine zum Bearbeiten bzw. Verarbeiten eines förderbaren Materials, insbesondere einer fliessfähigen oder pastösen Masse oder eines Schüttguts, wobei die Maschine mindestens einen Durchlassabschnitt (2; 21; 47, 48) mit mindestens einem Durchlass (2a; 21a; 47, 48) aufweist, durch den das zu bearbeitende bzw. verarbeitende förderbare Material (M) entlang einer Förderrichtung (F) transportierbar ist, **dadurch gekennzeichnet, dass** der mindestens eine Durchlassabschnitt (2; 21; 47, 48) mindestens einen Teilbereich eines Kanals (1) der Maschine bildet und relativ zum Kanal (1) der Maschine beweglich gelagert ist, wobei der mindestens eine Durchlassabschnitt (2; 21; 47, 48) mit mindestens einer Quelle (6, 7, 8, 9) für Schwingungen gekoppelt ist, durch die er relativ zum Kanal (1) der Maschine in mechanische Schwingungen versetzbar ist, **dadurch gekennzeichnet, dass** der mindestens eine Durchlassabschnitt (47, 48) in dem Kanal (1) der Maschine ein mit vibrierbaren Kollisionskörpern (41, 42) gefüllter Volumenabschnitt des Kanales (1) ist.

2. Maschine nach Anspruch 1, **dadurch gekennzeichnet, dass** die Kollisionskörper (41, 42) eine dichtestmögllche Packung (47, 48) mit Hohlräumen zwischen einander berührenden Kollisionskörpern bilden.

3. Maschine nach Anspruch 1 oder 2, **dadurch gekennzeichnet, dass** die Kollisionskörper (41, 42) verschiedene Grössen und/oder verschiedene Formen haben.

4. Maschine nach einem der Ansprüche 1 bis 3, **dadurch gekennzeichnet, dass** die Kollisionskörper (41, 42) mindestens eine der folgenden Formen haben: Kugelform, Polyederform, Stabform, insbesondere Zylinderform oder Prismenform.

5. Maschine nach einem der Ansprüche 1 bis 4, **dadurch gekennzeichnet, dass** mindestens ein Teil der Kollisionskörper (41, 42) aus einem elektrisch leitfähigen Material bestehen und die Quelle (6, 7, 8, 9) für Schwingungen eine Quelle für elektromagnetische Schwingungen ist, wobei sich die elektrisch leitfähigen Kollisionskörper durch die erzeugten elektromagnetischen Wechselfelder zu mechanischen Schwingungen und/oder Bewegungen anregen lassen.

6. Maschine nach einem der Ansprüche 1 bis 5, **dadurch gekennzeichnet, dass** der mindestens eine Durchlessabschnitt (2; 21; 47, 48) relativ zum Kanal der Maschine mittels elastischen Mitteln (4) gelagert ist.

7. Maschine nach einem der vorhergehenden Ansprüche, **dadurch gekennzeichnet, dass** zwischen dem mindestens einen Durchlassabschnitt (2; 21; 47, 48) und dem Kanal (1) der Maschine dämpfende Mittel angeordnet sind; wobei insbesondere das förderbare Material als dampfendes Mittel dient.

8. Maschine nach einem der vorhergehenden Ansprüche, **dadurch gekennzeichnet, dass** der mindestens eine Durchlassabschnitt (2; 21; 47, 48) und der Kanal (1) der Maschine schwingungsmässig entkoppelt sind.

9. Maschine nach einem der vorhergehenden Ansprüche, **dadurch gekennzeichnet, dass** der mindestens eine Durchlassabschnitt (2; 21; 47, 48) durch die mindestens eine Quelle (6, 7, 8, 9) in Schwingungen versetzbar ist, die eine Tangential-und/oder Normalkomponente (T, N) bezüglich der dem förderbaren Material (M) zugewandten inneren Oberfläche (5) des mindestens einen Durchlasses (2a; 21a; 47, 48) aufweisen.

10. Maschine nach einem der vorhergehenden Ansprüche, **dadurch gekennzeichnet, dass** mehrere. Durchlassabschnitte (2; 21; 47, 48) in mindestens einem Teilbereich des Kanals (1) der Maschine entlang der Förderrichtung (F) des Kanals aufeinanderfolgend angeordnet sind.

11. Maschine nach Anspruch 10, **dadurch gekennzeichnet, dass** zumindest einige der mehreren aufelnanderiolgenden Durchlassabschnitte (2; 47, 48) entlang der Förderrichtung (F) beabstandet angeordnet sind.

12. Maschine nach Anspruch 10 oder 11, **dadurch gekennzeichnet, dass** die mehreren Durchlassabschnitte zueinander identisch sind.

13. Maschine nach Anspruch 10 oder 11, **dadurch gekennzeichnet, dass** zumindest einige der mehreren Durchlassabschnitte (47, 48) voneinander verschieden sind.

14. Maschine nach einem der Ansprüche 10 bis 13, **dadurch gekennzeichnet, dass** die mehreren Durchlassabschnitte in zueinander identische Schwingungen versetzbar sind.

15. Maschine nach einem der Ansprüche 10 bis 13, **dadurch gekennzeichnet, dass** zumindest einige der mehreren Durchlassabschnitte (2; 47, 48) in voneinander verschiedene Schwingungen versetzbar sind.

16. Maschine nach einem der vorhergehenden Ansprüche; **dadurch gekennzeichnet, dass** die mindestens eine Quelle (8, 7, 8, 9) für mechanische Schwingungen ein Vibrator ist und die mechanischen Schwingungen gedämpfte erzwungene Schwingungen des mindestens einen Durchlassabschnitts (2; 21; 47, 48) sind.

17. Maschine nach einem der vorhergehenden Ansprüche, **dadurch gekennzeichnet, dass** die mindestens eine Quelle (6, 7, 8, 9) für mechanische Schwingungen eine Schlagvorrichtung ist und die mechanischen Schwingungen gedämpfte Stossanregungen des mindestens einen Durchlassabschnitts (2; 21; 47, 48) sind.

18. Maschine nach Anspruch 16 oder 17, **dadurch gekennzeichnet, dass** sie mehrere Quellen (6, 8, 9) für mechanische Schwingungen aufweist.

19. Maschine nach einem der Ansprüche 16 bis 18, **dadurch gekennzeichnet, dass** die mindestens eine Quelle (6, 7, 8, 9) für mechanische Schwingungen unabhängig vom Betriebszustand der Maschine ansteuerbar ist.

20. Maschine nach Anspruch 18 oder 19, **dadurch gekennzeichnet, dass** die mehreren Quellen (6, 7, 8, 9) für mechanische Schwingungen voneinander gesondert ansteuerbar sind.

21. Maschine nach einem der vorhergehenden Ansprüche, **dadurch gekennzeichnet, dass** mindestens eine erste Einrichtung (10) zum Erfassen der rheologischen Eigenschaften des förderbaren Materials stromab von dem jeweiligen Durchlassabschnitt (2; 21; 47, 48) angeordnet ist zur Erzeugung erster Signale an einem ersten Signalausgang (11), welche die physikalisch-chemischen, insbesondere rheologischen Eigenschaften des Materials (M) stromab von dem Durchlassabschnitt (2; 21; 47, 48) kennzeichnen.

22. Maschine nach einem der vorhergehenden Ansprüche, **dadurch gekennzeichnet, dass** mindestens eine zweite Einrichtung (12) zum Erfassen der rheologischen Eigenschaften des förderbaren Materials (M) stromauf von dem jeweiligen Durchlassabschnitt (2; 21; 47, 48) angeordnet ist zur Erzeugung zweiter Signale an einem zweiten Signalausgang (13), welche die physikalisch-chemischen, insbesondere rheologischen Eigenschaften des Materials (M) stromauf von dem Durchlassabschnitt (2; 21; 47, 48) kennzeichnen.

23. Maschine nach einem der Ansprüche 21 oder 22, **dadurch gekennzeichnet, dass** die Signale des ersten und/oder des zweiten Signalausgangs (11, 13) mit jeweiligen Referenzsignalen verglichen werden, die bestimmte rheologische Eigenschaften kennzeichnen, wobei in Abhängigkeit von dem Ergebnis des Vergleichs der Signale innerhalb eines Regelkreises eine Rückkopplung erfolgt zur Ansteuerung der mindestens einen Quelle (6, 7, 8, 9) für mechanische Schwingungen.

24. Maschine nach einem der Ansprüche 21, 22 oder 23, **dadurch gekennzeichnet, dass** die Signal des ersten und des zweiten Signalausgangs (11, 13) miteinander verglichen werden, wobei in Abhängigkeit von dem Ergebnis des Vergleichs der Signale innerhalb eines Regelkreises eine Rückkopplung erfolgt zur Ansteuerung der mindestens einen Quelle (6, 7, 8, 9) für mechanische Schwingungen.

25. Maschine nach einem der vorhergehenden Ansprüche, **dadurch gekennzeichnet, dass** der Kanal (1) der Maschine und der mindestens eine Durchlass (2a; 21a; 47, 48) des Durchlessabschnitts (2; 21; 47, 48) vertikal verlaufen.

26. Maschine nach einem der Ansprüche 1 bis 24, **dadurch gekennzeichnet, dass** der Kanal (1) der Maschine und der mindestens eine Durchlass (2a; 21a; 47, 48) des Durchlassabschnitts (2; 21; 47, 48) horizontal verlaufen.

27. Maschine nach einem der vorhergehenden Ansprüche, **dadurch gekennzeichnet, dass** die Maschine ein Extruder (20) und der mindestens eine Durchlassabschnitt (2)) eine Düse, insbesondere die Extrusionsdüse, des Extruders ist.

28. Maschine nach einem der vorhergehenden Ansprüche, **dadurch gekennzeichnet, dass** die Maschine ein Extruder (20) und der mindestens eine Durchlassabschnitt (2) ein Schmelzefilter (21) des Extruders ist.

29. Maschine nach einem der Ansprüche 1 bis 28, **dadurch gekennzeichnet, dass** die Maschine eine Druckgussmaschine (20) und der mindestens eine Durchlassabschnitt (2) eine Konditionierungszelle der Druckgussmaschine ist.

## Claims

1. A machine for machining or processing a conveyable material, in particular a pourable or pasty mass or a loose material, wherein the machine has at least one outlet section (2; 21; 47, 48) with at least one outlet (2a; 21a; 47, 48), through which the conveyable material (M) to be machined or processed can be transported along a conveying direction (F), wherein the at least one outlet section (2; 21; 47, 48) forms at least one partial area of a channel (1) of the machine, and is moveably mounted relative to the channel (1) of the machine, wherein the at least one outlet section (2; 21; 47, 48) is coupled with at least one source (6, 7, 8, 9) for oscillations, by means of which it can be made to mechanically oscillate relative to the channel (1) of the machine, **characterized in that** the at least one outlet section (47,48) in the channel (1) of the machine is a volumetric section of the channel (1) filled with vibratable collision elements (41, 42) .

2. The machine according to claim 1, **characterized in that** the collision elements (41, 42) form as dense a package (47, 48) as possible, with hollow spaces between contacting collision elements.

3. The machine according to claim 1 or 2, **characterised in that** the collision elements (41, 42) have different sizes and/or shapes.

4. The machine according to one of claims 1 to 3, **characterized in that** the collision elements (41, 42) have at least one of the following shapes: spherical; polyhedral, bar-shaped, in particular cylindrical or prismatic.

5. The machine according to one of claim 1 to 4, **characterized in that** at least one part of the collision elements (41, 42) consists of an electrically conductive material , and the source (6, 7, 8, 9) for oscillations is a source for electromagnetic oscillations, wherein the electrically conductive collision elements can be excited by the generated electromagnetic alternating fields to mechanical oscillations and/or movements.

6. The machine according to one of claims 1 to 5, **characterized in that** the at least one outlet section (2; 21; 47, 48) is mounted relative to the channel of the machine by resilient means (4).

7. The machine according to one of the preceding claims, **characterized in that** dampening means are arranged between the at least one outlet section (2; 21; 47, 48) and the channel (1) of the machine, wherein in particular the conveyable material acts as the dampening means.

8. The machine according to one of the preceding claims, **characterized in that** the at least one outlet section (2; 21; 47, 48) and the channel (1) of the machine are decoupled in terms of oscillation.

9. The machine according to one of the preceding claims, **characterized in that** the at least one outlet section (2; 21; 47, 48) can be excited to oscillations by at least one source (6, 7, 8, 9) wherein the oscillations are of a kind that exhibit a tangential and/or normal component (T, N) relative to the inner surface (5) of the at least one outlet (2a; 21a; 47, 48) facing the conveyable material (M).

10. The machine according to one of the preceding claims, **characterized in that** several outlet sections (2; 21; 47, 48) are sequentially arranged in at least one partial area of the channel (1) of the machine along the conveying direction (F) of the channel.

11. The machine according to claim 10, **characterized in that** at least some of the several sequential outlet sections (2; 47, 48) are spaced apart along the conveying direction (F).

12. The machine according to claim 10 or 11, **characterized in that** the several outlet sections are identical to each other.

13. The machine according to claim 10 or 11, **characterized in that** at least some of the several outlet sections (47, 48) are different from each other.

14. The machine according to one of claims 10 to 13, **characterized in that** the several outlet sections can be excited to oscillations identical to each other.

15. The machine according to one of claims 10 to 13, **characterized in that** at least some of the several outlet sections (2; 47, 48) can be excited to oscillations different from each other.

16. The machine according to one of the preceding claims, **characterized in that** the at least one source (6, 7, 8, 9) for mechanical oscillations is a vibrator, and the mechanical oscillations are dampened, forced oscillations of the at least one outlet section (2; 21; 47, 48).

17. The machine according to one of the preceding claims, **characterized in that** the at least one source (6, 7, 8, 9) for mechanical oscillations is a striker that generates dampened collision excitations of the at least one outlet section (2; 21; 47, 48).

18. The machine according to claim 16 or 17, **characterized in that** it has several sources (6, 7, 8, 9) for mechanical oscillations.

19. The machine according to one of claims 16 to 18, **characterized in that** the at least one source (6, 7, 8, 9) for mechanical oscillations can be actuated independently of the operating status of the machine.

20. The machine according to claim 18 or 19, **characterized in that** the several sources (6, 7, 8, 9) for mechanical oscillations can be actuated separately from each other.

21. The machine according to one of the preceding claims, **characterized in that** at least one first device (10) for acquiring the rheological properties of the conveyable material is arranged downstream from the respective outlet section (2; 21; 47, 48) in order to generate first signals at a first signal output (11) that **characterized** the physicochemical, in particular rheological properties of the material (M) downstream from the outlet section (2; 21; 47, 48).

22. The machine according to one of the preceding claims, **characterized in that** at least one second device (12) for acquiring the rheological properties of the conveyable material (M) is arranged upstream from the respective outlet section (2; 21; 47, 48) in order to generate second signals at a second signal output (13) that characterize the physicochemical, in particular rheological properties of the material (M) upstream from the outlet section (2; 21; 47, 48).

23. The machine according to claim 21 or 22, **characterized in that** the signals of the first and/or second signal output (11, 13) are compared with those reference signals that **characterized** specific rheological properties , wherein feedback takes place within a control circuit as a function of the result from comparing the signals to activate the at least one source (6, 7, 8, 9) for mechanical oscillations.

24. The machine according to one of claim 21, 22 or 23, **characterized in that** the signals of the first and second signal output (11, 13) are compared with each other, wherein feedback takes place within a control circuit as a function of the result from comparing the signals to activate the at least one source (6, 7, 8, 9) for mechanical oscillations.

25. The machine according to one of the preceding claims, **characterized in that** the channel (1) of the machine and the at least one outlet (2a; 21a; 47, 48) of the outlet section (2; 21; 47, 48) run vertically.

26. The machine according to one of claims 1 to 24 **characterized in that** the channel (1) of the machine and the at least one outlet (2a; 21a, 47, 48) of the outlet section (2; 21; 47, 48) run horizontally.

27. The machine according to one of the preceding claims, **characterized in that** the machine is an extruder (20), and the at least one outlet section (2) is a die, in particular an extrusion die, of the extruder.

28. The machine according to one of the preceding claims, **characterized in that** the machine is an extruder (20), and the at least one outlet section (2) is a melt filter (21) of the extruder.

29. The machine according to one of claims 1 to 28, **characterized in that** the machine is diecasting machine (20), and the at least one outlet section (2) is a conditioning cell of the diecasting machine.

## Revendications

1. Machine de traitement ou de transformation d'un matériau transportable, en particulier d'une masse pâteuse ou fluide ou d'un produit en vrac, la machine présentant au moins un tronçon (2; 21; 47, 48) qui présente au moins un passage (2a; 21a; 47, 48) par lequel le matériau transportable (M) à traiter ou à transformer peut être transporté dans une direction de transport (F), sachant que
le ou les tronçons de passage (2; 21; 47, 48) forment au moins une partie d'un canal (1) et sont montés à déplacement par rapport au canal (1) de la machine,
en ce que le ou les tronçons de passage (2; 21; 47, 48) sont accouplés à au moins une source (6, 7, 8, 9) d'oscillations par laquelle ils peuvent être mis en oscillation mécanique par rapport au canal (1) de la machine,
sachant que
le ou les tronçons de passage (47, 48) ménagés dans le canal (1) de la machine sont une partie du volume du canal (1) remplie de corps de collision (41, 42) aptes à vibrer.

2. Machine selon la revendication 1, **caractérisée en ce que** les corps de collision (41, 42) forment un empilement (47, 48) aussi dense que possible qui présente des cavités entre des corps de collision qui se touchent mutuellement.

3. Machine selon les revendications 1 ou 2,
**caractérisée en ce que** les corps de collision (41, 42) ont des tailles différentes et/ou des formes différentes.

4. Machine selon l'une des revendications 1 à 3, sachant que les corps de collision (41, 42) ont au moins l'une des formes suivantes : sphère, polyèdre, barreau et en particulier cylindre ou prisme.

5. Machine selon l'une des revendications 1 à 4, sachant qu'au moins une partie des corps de collision (41, 42) est constituée d'un matériau électriquement conducteur et en ce que la source (6, 7, 8, 9) d'oscillations est une source d'oscillations électromagnétiques, les corps de collision électriquement conducteurs pouvant être amenés à osciller et/ou à se déplacer mécaniquement par les champs électromagnétiques alternatifs produits.

6. Machine selon l'une des revendications 1 à 5, sachant qu'au moins un tronçon de passage (2; 21; 47, 48) est monté en relation du canal de la machine au moyen de moyens élastiques (4).

7. Machine selon l'une des revendications précédentes, sachant que des moyens d'amortissement sont disposés entre au moins un tronçon de passage (2; 21; 47, 48) et le canal (1) de la machine, le matériau transportable servant en particulier de moyens d'amortissement.

8. Machine selon l'une des revendications précédentes, sachant qu'au moins un tronçon de passage (2; 21; 47, 48) et le canal (1) de la machine sont découplés l'un de l'autre en termes de vibrations.

9. Machine selon l'une des revendications précédentes, sachant que le ou les tronçons de passage (2; 21; 47, 48) peuvent être mis en oscillations par la ou les sources (6, 7, 8, 9), ces oscillations présentant une composante tangentielle et/ou une composante normale (T, N) par rapport à la surface intérieure (5) du ou des passages (2a; 21a; 47, 48) tournée vers le matériau transportable (M).

10. Machine selon l'une des revendications précédentes, sachant que dans au moins une partie du canal (1) de la machine, plusieurs tronçons de passage (2; 21; 47, 48) sont disposés en succession dans le sens du transport (F) du canal.

11. Machine selon la revendication 10, sachant qu'au moins certains différents tronçons successifs de passage (2; 47, 48) sont disposés à distance mutuelle dans la direction du transport (F).

12. Machine selon les revendications 10 ou 11, sachant que les différentes tronçons de passage sont identiques les uns aux autres.

13. Machine selon les revendications 10 ou 11, sachant qu'au moins certaines des différents tronçons de passage (47, 48) sont différents les uns des autres.

14. Machine selon l'une des revendications 10 à 13, sachant que les différents tronçons de passage peuvent être mis en oscillations identiques les unes aux autres.

15. Machine selon l'une des revendications 10 à 13, sachant qu'au moins certains des différents tronçons de passage (2; 47, 48) peuvent être mis en oscillations différentes les unes des autres.

16. Machine selon l'une des revendications précédentes, sachant que la ou les sources (6, 7, 8, 9) d'oscillations mécaniques sont un ou des vibreurs et en ce que les oscillations mécaniques sont des oscillations forcées amorties du ou des tronçons de passage (2; 21; 47, 48).

17. Machine selon l'une des revendications précédentes, sachant que la ou les sources (6, 7, 8, 9) d'oscillations mécaniques sont un ou des dispositifs de percussion et en ce que les oscillations mécaniques sont des percussions amorties du ou des tronçons de passage (2; 21; 47, 48).

18. Machine selon les revendications 16 ou 17, sachant qu'elle présente plusieurs sources (6, 7, 8, 9) d'oscillations mécaniques.

19. Machine selon l'une des revendications 16 à 18, sachant que la ou les sources (6, 7, 8, 9) d'oscillations mécaniques peuvent être commandées indépendamment de l'état de fonctionnement de la machine.

20. Machine selon les revendications 18 ou 19, sachant que les différentes sources (6, 7, 8, 9) d'oscillations mécaniques peuvent être commandées séparément les unes des autres.

21. Machine selon l'une des revendications précédentes, sachant qu'au moins un premier dispositif (10) de détection des propriétés rhéologiques du matériau transportable est disposé en aval de chaque tronçon de passage (2; 21; 47, 48) et délivre des premiers signaux sur une première sortie de signaux (11), lesquels signaux caractérisent les propriétés physicochimiques et en particulier rhéologiques du matériau (M) en aval du tronçon de passage (2; 21; 47, 48).

22. Machine selon l'une des revendications précédentes, sachant qu'au moins un deuxième dispositif (12) de détection des propriétés rhéologiques du matériau transportable (M) est disposé en amont du tronçon de passage concerné (2; 21; 47, 48) et forme des deuxièmes signaux sur une deuxième sortie de signaux (13), lesquels signaux caractérisent les propriétés physicochimiques et en particulier les propriétés rhéologiques du matériau (M) en amont du tronçon de passage (2; 21; 47, 48).

23. Machine selon l'une des revendications 21 ou 22, sachant que les signaux de la première et/ou de la deuxième sortie de signaux (11, 13) sont comparés à des signaux de référence qui caractérisent des propriétés rhéologiques définies, une rétroaction de commande de la ou des sources (6, 7, 8, 9) d'oscillations mécaniques ayant lieu à l'intérieur d'une boucle de régulation en fonction du résultat de la comparaison des signaux.

24. Machine selon l'une des revendications 21, 22 ou 23, sachant que les signaux de la première et de la deuxième sortie de signaux (11, 13) sont comparés les uns aux autres, une rétroaction de commande de la ou des sources (6, 7, 8, 9) d'oscillations mécaniques ayant lieu à l'intérieur d'une boucle de régulation en fonction du résultat de la comparaison des signaux.

25. Machine selon l'une des revendications précédentes, sachant que le canal (1) de la machine et le ou les passages (2a; 21a; 47, 48) des tronçons de passage (2; 21; 47, 48) s'étendent à la verticale.

26. Machine selon l'une des revendications 1 à 24, sachant que le canal (1) de la machine et au moins un passage (2a; 21a; 47, 48) du tronçon de passage (2; 21; 47, 48) s'étendent à l'horizontale.

27. Machine selon l'une des revendications précédentes, sachant que la machine est une extrudeuse (20) et le ou les tronçons de passage (2) une filière et en particulier une filière d'extrusion de l'extrudeuse.

28. Machine selon l'une des revendications précédentes, sachant que la machine est une extrudeuse (20) et le ou les tronçons de passage (2) des filtres (21) à matière fondue de l'extrudeuse.

29. Machine selon l'une des revendications 1 à 28, sachant que la machine est une machine (20) de coulée sous pression et le ou les tronçons de passage (2) des cellules de conditionnement de la machine de coulée sous pression.
